# EUROPÄISCHE PATENTSCHRIFT

(11) **EP 0 513 641 B1**
(45) Veröffentlichungstag und Bekanntmachung des Hinweises auf die Patenterteilung: **14.12.1994**
(21) Anmeldenummer: 92107606.3
(22) Anmeldetag: 06.05.1992
(51) Int. Cl.: B62D 25/18

(54) **Schmutzfänger für Kraftfahrzeuge**
Mud flap for vehicles
Bavette de garde-boue pour véhicules

(30) Priorität: 11.05.1991 DE 4115516
(43) Veröffentlichungstag der Anmeldung: 19.11.1992
(73) Patentinhaber: WEGU Gummi- und Kunststoffwerke Walter Dräbing KG, D-34123 Kassel (DE)
(72) Erfinder: Dräbing, Walter, W-3501 Niestetal (DE); Müller, Manfred, W-3524 Immenhausen (DE); Barth, Thomas, W-3430 Witzenhausen 3 (DE)
(74) Vertreter: Rehberg, Elmar, Dipl.-Ing.

(56) Entgegenhaltungen:
- GB-A- 2 084 094
- GB-A- 2 207 647
- US-A- 1 904 343
- US-A- 2 714 015

## Beschreibung

Die Erfindung bezieht sich auf einen Schmutzfänger für Kraftfahrzeuge mit einem flächigen Grundkörper aus Gummi, Kunststoff o. dgl., auf dessen dem Fahrzeugrad zugekehrter Rückseite in einem Mittelbereich V-förmig verlaufende Rippen zum Auffangen, Abbremsen und Ableiten von vom Fahrzeugrad aufgewirbelten Wassers und in zwei symmetrisch zur Längsmittelebene angeordneten Seitenbereichen Kanäle für das Niederführen des im Mittelbereich aufgefangenen und abgeleiteten Wassers vorgesehen sind. Unter einem solchen Schmutzfänger wird ein an das betreffende Radgehäuse angepaßtes Formteil oder auch plattenförmiges Material verstanden, welches in den jeweiligen Abmessungen abgeschnitten und dabei an die geometrischen Bedingungen des Anbringungsorts angepaßt wird. Dies gilt insbesondere für LKW-Schmutzfänger. Der Schmutzfänger kann aus Gummi, Kunststoff oder einem anderen elastomeren Material bestehen. Bei solchen Schmutzfängern ist das Auffangen von Schmutz, also der Verhinderung des Auftreffens von Steinen auf Karosserieteile, nur von untergeordneter Bedeutung. Eine weit größere Bedeutung kommt dem Auffangen von Wasser zu, welches auf regennasser Fahrbahn von dem zugehörigen Fahrzeugrad aufgewirbelt wird. Insbesondere in Spurrillen kann sich das Wasser auch bis zu einer gewissen Wasserstandshöhe aufstauen bzw. sammeln, so daß die vom Fahrzeugrad abgeschleuderte Wassermenge in vergleichsweise großen Grenzen schwanken kann. Durch das Auftreffen des Wassers auf den Schmutzfänger oder auf andere Karosserieteile, insbesondere im Bereich des Radkastens, findet eine Verwirbelung und eine Sprühnebelbildung statt, die besonders deutlich beim LKWs zu beobachten ist. Das Entstehen eines solchen Sprühnebels behindert nicht nur die Sicht nach hinten durch den Rückspiegel an der Fahrzeugaußenseite entlang, sondern stellt auch ein Sichthindernis für den vorbeifahrenden, überholenden Verkehr dar.

Aus der EP-A-302 718 ist ein Schmutzfänger der eingangs beschriebenen Art bekannt. Der Schmutzfänger ist als Formkörper ausgebildet und weist auf seiner dem Fahrzeugrad zugekehrten Rückseite ein Feld mit Rippen auf, die selbst schräg zur Fläche des Grundkörpers angeordnet sind, wobei ein Winkel von 75° bevorzugt wird. Gegenüber der Horizontalebene verlaufen die Rippen zumindest in einem Mittelbereich V-förmig nach oben geneigt. Die Rippen können sich in horizontal oder in abwärts geneigten Bereichen fortsetzen. Im Mittelbereich, in welchem erfahrungsgemäß die größte Wassermenge anfällt, sind die Rippen jedoch nach oben V-förmig geneigt angeordnet. Die Rippen selbst besitzen parallel gestaltete Wandungen, weisen also über ihre Höhe gleiche Dicke auf und sind an ihrem freien Ende etwa scharfkantig begrenzt. In den Seitenbereichen befinden sich Kanäle für das Niederführen des im Mittelbereich aufgefangenen Wassers, wobei diese Kanäle von im Querschnitt C-förmigen Wandungen gebildet werden, so daß die Kanäle nach hinten geschlossen ausgebildet sind und nur seitlich vom Mittelbereich aus befüllt werden können. Damit ist ein ungestörtes Niederführen des aufgefangenen Wassers möglich, vorausgesetzt, das Wasser erreicht auch diese Kanäle und wird an einer Aufwirbelung durch das Auftreffen im Mittelbereich gehindert.

Aus der DE-A-20 45 212 ist ein Schmutzfänger für Kraftfahrzeuge bekannt, der eine Vielzahl von Rippen aufweist, die durch Drähte oder Stifte zusammengehalten sind und die Einzelflächen besitzen, die so angeordnet und ausgebildet sind, daß das vom Fahrzeugrad aufgewirbelte Wasser auf die Flächen im spitzen Winkel auftrifft. Dabei soll das Wasser einen Teil seiner Geschwindigkeit verlieren und Energie abgeben. Die Einzelflächen der Rippen sind parallel und im Abstand zueinander angeordnet, teilweise paarweise einander zugeordnet oder auch als Längs- und Querstege ausgebildet. In all diesen Ausführungsformen wird eine schräg zur Auftreffrichtung des Spritzwassers angeordnete Fläche dazu benutzt, um Energie abzugeben. Keine Beachtung wird der Frage geschenkt, wie das abgebremste Wasser weitergeleitet werden soll. In der Regel bestehen zwischen den Rippen Durchbrechungen, z. B. in Form von Schlitzen, durch die das Wasser entgegen der Fahrtrichtung durch den Schmutzfänger hindurchtritt.

Um der beschriebenen Sprühnebelbildung entgegenzuwirken, ist weiterhin ein Schmutzfänger aus der DE-A-31 02 805 bekannt. Der Schmutzfänger weist einen flächigen Grundkörper auf, auf dessen dem Fahrzeugrad zugekehrter Rückseite Vorsprünge als flexible Einzelelemente in Form schlanker, zumindest im wesentlichen aufrechtstehender Stöpsel oder Fortsätze vorgesehen sind. Diese Vorsprünge besitzen etwa zylindrische oder kegelstumpfförmige, sich in Richtung auf ihr freies Ende verjüngende Formgebung und sind in unsymmetrischer Verteilung auf der Hauptfläche des Grundkörpers ohne Beziehung zueinander als Einzelelemente angeordnet. Die Abstände zwischen den einzelnen Elementen bzw. Vorsprüngen ist jeweils unterschiedlich gestaltet. Die Vorsprünge sollen die Aufprallenergie von Wassertropfen abbremsen und die Richtung rückprallender Wassertröpfchen so beeinflussen, daß die Bildung von gefährlichem Sprühnebel vermieden wird. Durch ihre elastische Gestaltung sollen die Vorsprünge einem Anhaften und Ansetzen von Schmutz an der Rückseite des Grundkörpers entgegenwirken, so daß durch die im Betrieb sich ergebenden Rüttelbewegungen ein vorteilhafter Selbstreinigungseffekt vorliegen soll. Eine Verminderung des auftretenden Sprühnebels ist hier nur bis zu gewissem Grad möglich. Der Flächenanteil der Hauptfläche bzw. Rückseite des Schmutzfängers ist relativ hoch, auf den in mehr oder weniger senkrechter Richtung das vom Fahrzeugrad aufgewirbelte Wasser auftrifft, so daß die einzelnen Wassertropfen einer zerplatzenden bzw. zerstäubenden Wirkung unterzogen werden, die nicht zu einer Reduzierung des Sprühnebeleffekts führt. Dagegen werden solche Wassertropfen, die auf die Vorsprünge treffen, aufgefangen, abgebremst und abgeleitet, wobei die Ableitung des Wassers unkontrolliert nach allen Seiten hin erfolgt. Eine gewisse Verschmutzungsgefahr durch anhaftenden und sich ansetzenden Schmutz, insbesondere bei zylindrischer Ausbildung der Fortsätze, läßt sich nicht in Abrede stellen. Während der kalten Jahreszeit wird oft auch Matsch und Schnee aufgewirbelt bzw. von den Fahrzeugreifen abgeschleudert. Bei entsprechenden klimatischen Bedingungen kann dies dazu führen, daß sich auf der Rückseite des Schmutzfängers eine geschlossene Eisschicht bildet, die zu einer Einnivellierung der Oberfläche des Schmutzfängers führt, so daß jegliche vorteilhafte Wirkung beseitigt ist. Der Grundkörper eines solchen Schmutzfängers muß vergleichsweise stabil gestaltet werden, weil er die Formgebung des Schmutzfängers, auch gegen den Druck des Fahrtwinds und des aufgewirbelten Wasserstrahls, bereitstellen muß. Wenn dagegen die Vorsprünge sehr flexibel ausgebildet werden müssen, damit durch die auftretenden Schwingungen ein nennenswerter Rütteleffekt feststellbar ist, müssen oft zwei verschiedene Materialmischungen aus Gummi oder anderem Elastomer zusammen eingesetzt und verpreßt werden, wodurch die Herstellung solcher Schmutzfänger aufwendig und teuer wird. Wenn die Anzahl der Vorsprünge auf der Rückseite des Schmutzfängers gesteigert wird, steigert man damit zwar auch die Abbremswirkung. Andererseits wird die Herstellung problematischer, weil sich die Vertiefungen in den Werkzeugen beim Pressen zusetzen können, und zwar desto mehr, je feiner und schlanker die einzelnen kegelstumpfförmigen Gegenstände ausgebildet und gestaltet sind.

Der Erfindung liegt die Aufgabe zugrunde, einen Schmutzfänger der eingangs beschriebenen Art derart weiterzubilden, daß er einen sehr großen Teil des aufgespritzen Wassers, insbesondere mehr als 70 %, verläßlich nach unten abführt, so daß auf diesem Weg der Sprühnebelbildung entgegengewirkt wird.

Erfindungsgemäß wird dies bei einem Schmutzfänger der eingangs beschriebenen Art dadurch erreicht, daß die Rippen von ihrem Scheitel in der Längsmittelebene V-förmig nach unten geneigt vorgesehen sind, einen sich in Richtung vom Grundkörper auf ihr freies Ende verjüngenden Querschnitt aufweisen und so dicht zueinander angeordnet sind, daß die Vertiefungen zwischen den Rippen etwa gleiche Querschnittsfläche, freilich in umgekehrter Anordnung, wie die Querschnittsfläche der Rippen aufweisen, und daß die in den Seitenbereichen angeordneten Kanäle nach der dem Fahrzeugrad zugekehrten Seite offen gestaltet sind und mindestens zwei durchgehende Längsrippen aufweisen, von denen die der Längsmittelebene zugekehrte Längsrippe eine geringere Höhe als die dem Längsrand des Schmutzfängers zugekehrte Längsrippe hat.

Die Erfindung geht von dem Gedanken aus, das vom Fahrzeugrad aufgewirbelte Wasser, welches auf den Mittelbereich des Schmutzfängers auftrifft, zunächst einmal aufzufangen und abzubremsen. Hierzu dienen die Rippen, die vergleichsweise dicht beieinander angeordnet sind, so daß praktisch überall Begrenzungsflächen der Rippen zur Verfügung stehen, mit denen das aufgewirbelte Wasser abbremsend in Kontakt kommt. Die im wesentlichen senkrecht zur Spritzrichtung des Wassers stehende Fläche des Grundkörpers wird damit zum Auffangen des Wassers nicht genutzt. Die zwischen den Rippen gebildeten Vertiefungen dienen in Verbindung mit der V-förmig nach unten geneigten Anordnung der Rippen der Abfuhr des aufgefangenen Wassers nach rechts und links von der Längsmittelebene des Schmutzfängers, wobei das Wasser in vergleichsweise engen Kanälen geführt wird. Bei diesem Wirkmechanismus wird die Schwerkraft und die Luftströmung im Bereich des Radkastens vor dem Schmutzfänger ausgenutzt, um die seitliche Ableitung des Wassers in den Vertiefungen zu bewerkstelligen. Bei vermehrtem Spritzwasserabfall ist es zunächst ein Ableitungsproblem, um den Mittelbereich immer wieder freizubekommen und damit zum Auffangen von weiterem Spritzwasser zu nutzen. Die Anordnung der V-förmigen Rippen nach oben geneigt, wie es im Stand der Technik bekannt ist, führt hier nicht zum Ziel, da die Schwerkraft dem entgegenwirkt. Bei der anmeldungsgemäßen Ausbildung ergibt sich in weiten Bereich ein Gleichgewicht zwischen der durch die Schwerkraft einwirkenden Kraft und den durch die Luftströmungen verursachten Kräfte, so daß das Spritzwasser aufgeteilt in den Vertiefungen zwischen den Rippen aus dem Mittelbereich nach außen weitergeleitet wird und über die Rippen nicht übertritt. Damit wird ein Großteil der Oberfläche der Rippen immer wieder freigemacht bzw. freigehalten, so daß hier nachfolgendes Spritzwasser aufgenommen und abgebremst werden kann.

Die im Seitenbereich angeordneten Kanäle sind dem Fahrzeugrad zugekehrt offen gestaltet, so daß hier seitlich vom Fahrzeugrad abgeschleudertes Wasser auf einen herablaufenden Wasserfilm auftreffen kann und von diesem mitgenommen wird. Die Längsrippen sind in entsprechendem Abstand zueinander angeordnet, so daß sich hier ein flächiger, nicht zu dicker Wasserfilm ergibt, der nach unten herabfließt. Die der Längsmittelebene zugekehrte Längsrippe wirkt dabei gleichsam als Stolperschwelle. Sie besitzt im Vergleich zu der weiteren Längsrippe eine verringerte Höhe, so daß hier ein Teil des von den Vertiefungen der V-förmigen Rippen herangeführten Wassers über die erste Längsrippe übertreten kann, während ein anderer Teil abgeteilt diesen Übertritt nicht schafft und vor der ersten Längsrippe nach unten abströmt. Die erste Längsrippe wirkt damit auch als Teilungselement für das Wasser. Es versteht sich, daß auch mehr als zwei Längsrippen vorgesehen sein können, wobei es zweckmäßig ist, die Höhe der Längsrippen gestuft von innen nach außen anwachsen zu lassen, um letztlich zu erreichen, daß kein Wasser über die Längsränder des Schmutzfängers übertritt, sondern sämtliches Wasser nach unten über den Querrand abgeführt wird.

Die V-förmig angeordneten Rippen sollten zur Horizontalen in einem Winkel in einem Bereich von 18 bis 22°, vorzugsweise etwa 20°, vorgesehen sein. Versuche haben ergeben, daß dieser Winkelbereich insofern vorteilhaft ist, als die aufgefangenen Wasserpartikel infolge des Einflusses der Schwerkraft und der Luftströmung im Radkastengehäuse parallel zu der geraden Erstreckung der Rippen bzw. Vertiefungen in den letzteren abgeführt werden. Es ist dabei weder ein Stau des Wassers zu beobachten noch ein Übertreten von Wasserpartikeln über die einzelnen Rippen quer zu ihrer Erstreckungsrichtung.

Die V-förmig angeordneten Rippen sollten eine Höhe von 15 bis 20 mm, vorzugsweise etwa 17 mm, und einen Abstand voneinander von 8 bis 12 mm, vorzugsweise etwa 10 mm, aufweisen. Damit sind die Rippen vergleichsweise sehr dicht zueinander angeordnet und es ergibt sich praktisch für jeden Wasserpartikel eine schräge Bremsfläche an den Rippen, um Energie abzugeben. Es ist jedoch auch möglich, unter Einhaltung der sich bildenden Verhältnisse die Geometrie der Rippen und Vertiefungen insgesamt zu vergrößern bzw. zu verkleinern.

Die Flanken der Rippen können einen Winkel von etwa 16 bis 18° aufweisen und das freie Ende der Rippen kann abgerundet gestaltet sein. Es ist nicht das Ziel, die Wasserpartikel auf den freien Enden der Rippen aufzufangen, sondern an ihren Flanken, wobei diese Flanken in einem sehr flachen Winkel schräg zur Auftreffrichtung der vom Fahrzeugrad abgeschleuderten Wasserpartikel angeordnet sind.

Die V-förmig angeordneten Rippen selbst sind rechtwinklig zum Grundkörper abstehend vorgesehen, d. h. eine Mittellinie der Rippen erstreckt sich senkrecht zum Grundkörper.

Die der Längsmittelebene zugekehrte Längsrippe kann eine Höhe von etwa 7 mm und die anderen Längsrippen von etwa 15 bis 20 mm, vorzugsweise etwa 17 mm, aufweisen. Damit hat die erste Längsmittelebene in Richtung des von den freien Enden der Vertiefungen abgegebenen Wassers zunächst einmal Aufteilfunktion. Ein Teil des Wassers wird über diese erste Längsrippe hinwegtreten, ein zweiter Teil des Wassers wird abgebremst werden. Damit wird rechts und links der ersten Längsrippe je ein voneinander getrennter Kanal gebildet, durch den das jeweils abgeteilte Wasser nach unten niedergeführt wird. Es können auch mehrere Längsrippen vorgesehen sein, die in ihrer Höhe zweckmäßig gestuft von innen nach außen zunehmend vorgesehen sind. Die äußerste Längsrippe, die am Längsrand des Schmutzfängers angeordnet ist, sollte eine solche Höhe aufweisen, daß möglichst kein Wasser über sie hinwegtreten kann, weil dieser Übertritt von Wasser mit seitlichen Ablöseerscheinungen vom Schmutzfänger verbunden ist, wodurch wiederum die Sprühnebelbildung vergrößert wird.

Die der Längsmittelebene zugekehrte Längsrippe kann mit Abstand zum freien Ende der V-förmig angeordneten Rippen angeordnet sein und auch zwischen den anderen Längsrippen können Abstände vorgesehen sein. Diese Abstände sind relativ breit ausgebildet, so daß hier flächige Bereiche für das Niederführen des Wassers in jeweils einem dünnen, schleierartigen Vorhang vorgesehen sind.

Auch die Längsrippen sind zweckmäßig rechtwinklig zum Grundkörper abstehend vorgesehen. Dies dient nicht nur der leichten Entformbarkeit des Schmutzkörpers aus der Preß- oder Spritzform, sondern bietet auch die Gewähr dafür, daß die Längsrippen ihre Brems- und Umlenkfunktion für das aufgefangene Wasser optimal erfüllen.

Der Mittelbereich, in dem die V-förmigen Rippen angeordnet sind, kann etwa die Hälfte des Bereichs des Grundkörpers aufweisen. Im allgemeinen ist der Mittelbereich geringfügig größer als die restliche Oberfläche des Grundkörpers gestaltet. Die nach hinten offenen Kanäle in den Seitenbereichen sind jedoch ungewöhnlich breit - im Verhältnis zu der Ausdehnung des Mittelbereichs - ausgebildet.

Die Längsrippen sind am unteren Rand des Grundkörpers frei endend vorgesehen, damit das in Teilströmen herabgeführte Wasser ohne Behinderung den unteren Querrand des Schmutzfängers verlassen kann. Dies ist ein Bereich, in welchem die Luftströmung vergleichsweise geringere Geschwindigkeiten aufweist, so daß die Gefahr von Sprühnebelbildung beim Ablösen weitgehend gemindert ist.

Die Erfindung wird anhand eines bevorzugten Ausführungsbeispiels des Schmutzfängers weiter erläutert und beschrieben. Es zeigen:

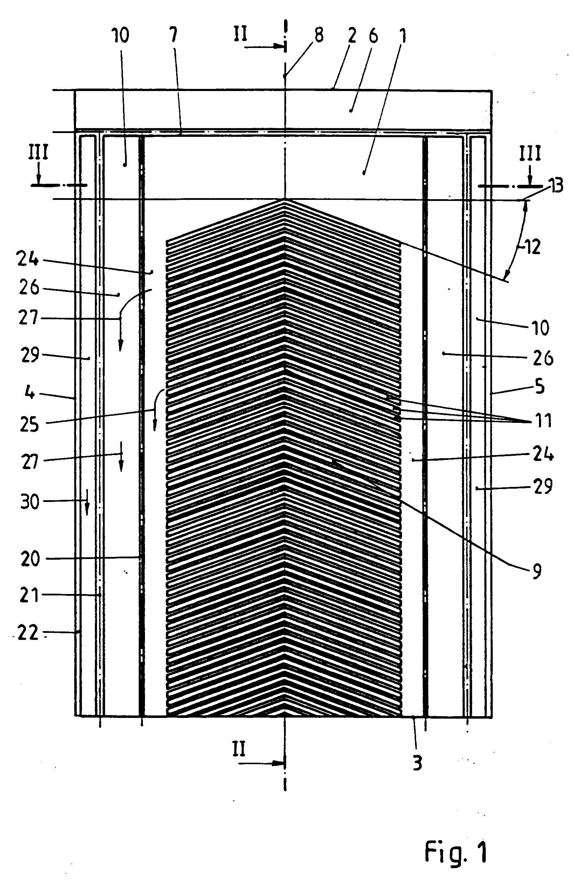

- Figur 1: eine Ansicht auf die Rückseite des Schmutzfängers in ebenem Zustand,
- Figur 2: einen Schnitt gemäß der Linie II-II in Figur 1
- Figur 3: einen Schnitt gemäß der Linie III-III in Figur 1,
- Figur 4: eine Einzelheit gemäß der Angabe IV in Figur 3,
- Figur 5: eine schematisierte Seitenansicht des Schmutzfängers in montiertem Zustand und
- Figur 6: eine Einzelheit gemäß der Angabe VI in Figur 5.

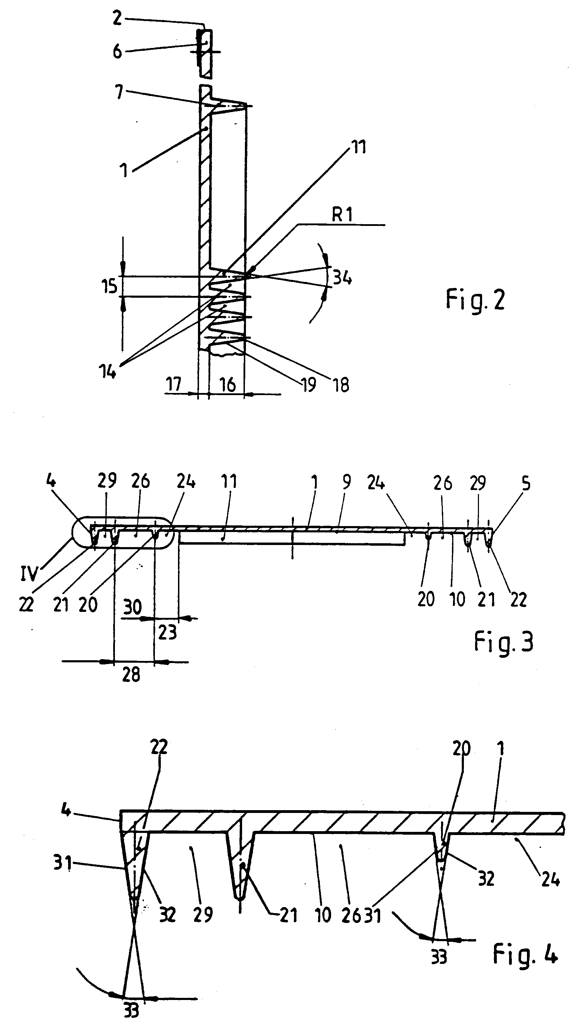

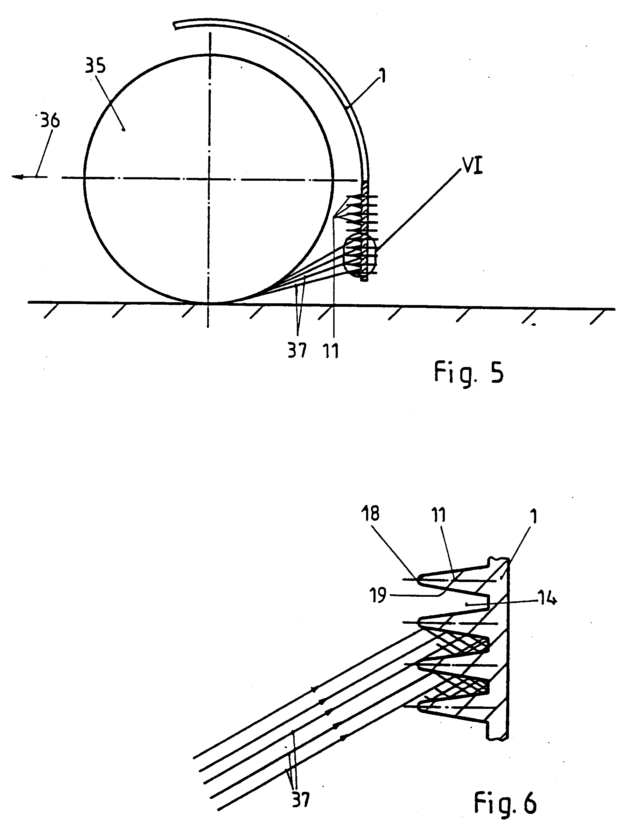

Der Schmutzfänger weist einen flächigen Grundkörper 1 auf, wie er besonders anschaulich auch aus Figur 2 hervorgeht. Der Schmutzfänger ist hier bereits als Formkörper ausgebildet und besitzt einen oberen Querrand 2, einen unteren Querrand 3 und zwei Längsränder 4 und 5. Entlang des oberen Querrands 2 erstreckt sich ein Befestigungsstreifen 6, der der Anbringung am Fahrzeug dient. Der Befestigungsstreifen 6 wird von einer Querrippe 7 begrenzt. Unterhalb der Querrippe 7 bildet der Grundkörper 1 einen Lappenhauptkörper, der, wie auch der Befestigungsstreifen 6, symmetrisch zu einer Längsmittelebene 8 ausgebildet ist. Rechts und links an die Längsmittelebene 8 in Richtung auf die Längsränder 4 und 5 erstreckt sich zunächst ein Mittelbereich 9 und zwei Seitenbereiche 10. Im Mittelbereich 9 sind V-förmig angeordnete Rippen 11 vorgesehen, die gerade verlaufen und relativ dicht zueinander angeordnet sind, wie dies auch aus den Figuren 2 und 6 hervorgeht. Die Rippen 11 erstrecken sich abgesehen von ihrem in der Längsmittelebene 8 angeordneten Scheitel geradlinig, wobei sie V-förmig nach unten geneigt angeordnet sind. Der Winkel 12 zwischen einer Horizontalen 13 und dem Schenkel der Rippen 11 liegt im Bereich von 18 bis 22°, vorzugsweise etwa bei 20°. Zwischen den Rippen 11 erstecken sich Vertiefungen 14, die infolge der Anordnung der Rippen ebenfalls geradlinig verlaufen und in die Fläche des Grundkörpers 1 offen übergehen. An dieser Übergangsstelle beginnt der jeweilige Seitenbereich 10, der sich bis zu den Längsrändern 4 bzs. 5 erstreckt. Die Fläche des Mittelbereichs 9, in welchem die V-förmig nach unten geneigten Rippen 11 angeordnet sind, ist geringfügig größer als die Fläche der beiden Seitenbereiche 10.

Figur 2 läßt die Ausbildung der Rippen 11 und der dazwischen angeordneten Vertiefungen 14 im Einzelnen erkennen. Die Rippen 11 und die Vertiefungen 14 weisen etwa gleiche Querschnittsfläche, jedoch in umgekehrter Anordnung, auf. Die Rippen 11 sind in einem Abstand 15 zueinander angeordnet, der etwa 10 mm betragen kann. Die Höhe 16 der Rippen 11 beträgt 17 mm und die Dicke 17 des Grundkörpers 1 5 mm. Die Rippen 11 sind sich konisch verjüngend auf ihr freies Ende zulaufend ausgebildet, so daß sich eine umgekehrte Querschnittsanordnung für die Vertiefungen 14 ergibt. Die freien Enden 18 der Rippen 11 sind abgerundet ausgebildet. Die Flanken 19 der Rippen 11 verlaufen schräg, also nicht rechtwinklig, zur Hauptebene des Grundkörpers 1.

Die Figuren 3 und 4 verdeutlichen die Ausbildung in den Seitenbereichen 10. Hier ist eine erste Längsrippe 20, eine zweite Längsrippe 21 und eine dritte Längsrippe 22 vorgesehen, die sich von oben nach unten durchgehend über jeden Seitenbereich 10 parallel zu den Längsrändern 4 und 5 erstrecken. Die erste Langsrippe 20 ist der Längsmittelebene 8 des Schmutzfängers zugekehrt angeordnet bzw. stellt die erste Längsrippe dar, in Strömungsrichtung des Wassers von innen nach außen gesehen. Zwischen dem seitlichen freien Ende der Rippen 11 und der Längsrippe 20 ist ein Abstand 23 vorgesehen, der im gezeigten Ausführungsbeispiel 30 mm betragen kann. Hier ist ein erster Kanal 24 gebildet, um eine Teilmenge des im Mittelbereich 9 aufgefangenen und abgebremsten Wassers parallel zu den Rändern 4 und 5 nach unten umzuleiten. Diese Abflußrichtung einer Teilmenge des Wassers ist durch einen Pfeil 25 gekennzeichnet. Eine andere Teilmenge wird die Längsrippe 20 überwinden und in den Bereich eines Kanals 26 gelangen, der zwischen den Rippen 20 und 21 gebildet wird und sich dort gemäß Pfeil 27 nach abwärts bewegen. Die Rippen 20 und 21 sind in einem Abstand 28 angeordnet, der hier beispielsweise 50 mm beträgt. Schließlich gibt es zwischen den beiden Längsrippen 21 und 22 noch einen Kanal 29, der ebenfalls von oben nach unten durchgehend gestaltet ist, um bei extrem großen Wassermengen noch die Restwassermenge aufzunehmen, die auch seitlich über die Längsrippe 21 übertritt. Dieses Restwasser wird dann gemäß Pfeil 30 niedergeführt. Auf jeden Fall gelangt kein nennenswerter Wasseranteil über die randseitige Längsrippe 22 hinweg. Die Kanäle 24, 26 und 29 sind nach vorwärts, also von der Rückseite des Schmutzfängers in Fahrtrichtung zeigend, offen ausgebildet. Die erste Längsrippe 20 besitzt jedoch eine geringere Höhe als die in Strömungsrichtung folgende Längsrippe 21. Es sollten mindestens zwei Längsrippen 20 und 21 vorgesehen sein. Die Anzahl der Längsrippen kann aber auch, wie dargestellt, erhöht sein, wobei bei drei Längsrippen 20, 21, 22 die Anordnung in der aus den Zeichnungen ersichtlichen Weise getroffen sein sollte. Auch die Längsrippen 20, 21, 22 verlaufen auf ihr freies Ende sich konisch verjüngend. Ihre beiden Flanken 31, 32 bilden miteinander einen Winkel 33, der 17° +/- 1° betragen kann. In ähnlicher Weise sind auch die Flanken 19 der Rippen 11 (Figur 2) gestaltet. Auch hier ergibt sich ein Winkel 34, der zweckmäßig 17° +/- 1° beträgt.

Figur 5 verdeutlicht die Anordnung des Schmutzfängers relativ zum Fahrzeugrad 35. Die Fahrtrichtung des Fahrzeugs ist durch Pfeil 36 angegeben. Der Grundkörper 1 des Schmutzfängers ist so angeordnet, daß seine Rippen 11 dem Fahrzeugrad 35 zugekehrt angeordnet sind. Das vom Fahrzeugrad 35 aufgewirbelte Wasser gelangt gemäß den Strahlen 37 schräg auf die Flanken 19 der Rippen 11 und wird dort abgebremst bzw. gebrochen, so daß es erhebliche Bewegungsenergie verliert. Auf das aufgefangene und abgebremste Wasser wirkt einerseits die Schwerkraft und andererseits Kräfte ein, die von der Luftbewegung im Radgehäuse ausgeübt werden. Die V-förmig nach unten geneigte bzw. offene Anordnung der Rippen 11 zueinandner, und zwar im Winkel 12 zur Horizontalen 13, bewirkt nun, daß bei einer Vielzahl von Bewegungszuständen das Wasser in den einzelnen Vertiefungen 14 aufgeteilt in deren Erstreckung von der Längsmittelebene 8 nach rechts und links auf die Seitenbereiche 10 zuströmt, ohne die Rippen 11 überwinden zu können. Diese Teilströme treten dann an den freien Enden der Rippen 11 aus und gelangen in den Kanal 24, wo sie sich wieder vereinen. Da ihre Bewegungsrichtung jedoch parallel zu der Erstreckung der Rippen 11 gerichtet ist, wirkt die erste Längsrippe 20 als Brems- und Aufteilrippe, d. h. ein Teil des Wassers wird sich gemäß Pfeil 25 weiterbewegen und ein weiterer Teil gemäß Pfeil 27. Die Wassermenge wird damit aufgeteilt. Wichtig ist, daß auf jeden Fall das Wasser im Bereich der Rippen 11 bzw. der Vertiefungen 14 so aufgefangen und abgebremst wird, daß es nachfolgendes Wasser in seinem Abbremsvorgang nicht behindert. Darüberhinaus muß sichergestellt sein, daß das Wasser in den Vertiefungen 14 ausreichend schnell nach rechts und links außen in Richtung auf die Seitenbereiche 10 abgeführt wird. Dies ist durch den Winkel 12 gewährleistet.

Mit dem neu gestalteten Schmutzfänger ist es möglich, entsprechend den geltenden Prüfvorschriften bis nahezu 80 % des aufgespritzten Wassers aufzufangen, abzubremsen und nach unten niederzuführen. In einem Versuch wurden 77 % gemessen. Der Schmutzfänger absorbiert damit 77 % des nach dem Amtsblatt der Europäische Gemeinschaft Nr. C 263/19 aufgesprühten Wassers.

| **Bezugszeichenliste:** | | | |
|---|---|---|---|
| 1 | = Grundkörper | 33 | = Winkel |
| 2 | = oberer Querrand | 34 | = Winkel |
| 3 | = unterer Querrand | 35 | = Fahrzeugrad |
| 4 | = Längsrand | 36 | = Pfeil |
| 5 | = Längsrand | 37 | = Strahl |
| 6 | = Befestigungsstreifen | | |
| 7 | = Querrippe | | |
| 8 | = Längsmittelebene | | |
| 9 | = Mittelbereich | | |
| 10 | = Seitenbereich | | |
| 11 | = Rippe | | |
| 12 | = Winkel | | |
| 13 | = Horizontale | | |
| 14 | = Vertiefung | | |
| 15 | = Abstand | | |
| 16 | = Höhe | | |
| 17 | = Dicke | | |
| 18 | = Ende | | |
| 19 | = Flanke | | |
| 20 | = Längsrippe | | |
| 21 | = Längsrippe | | |
| 22 | = Längsrippe | | |
| 23 | = Abstand | | |
| 24 | = Kanal | | |
| 25 | = Pfeil | | |
| 26 | = Kanal | | |
| 27 | = Pfeil | | |
| 28 | = Abstand | | |
| 29 | = Kanal | | |
| 30 | = Pfeil | | |
| 31 | = Flanke | | |
| 32 | = Flanke | | |

## Patentansprüche

1. Schmutzfänger (1) für Kraftfahrzeuge mit einem flächigen Grundkörper (1) aus Gummi, Kunststoff o. dgl., auf dessen dem Fahrzeugrad zugekehrter Rückseite in einem Mittelbereich V-förmig verlaufende Rippen (11) zum Auffangen, Abbremsen und Ableiten von vom Fahrzeugrad aufgewirbelten Wassers und in zwei symmetrisch zur Längsmittelebene (8) angeordneten Seitenbereichen Kanäle (24, 26, 29) für das Niederführen des im Mittelbereich aufgefangenen und abgeleiteten Wassers vorgesehen sind, dadurch gekennzeichnet, daß die Rippen (11) von ihrem Scheitel in der Längsmittelebene (8) V-förmig nach unten geneigt vorgesehen sind, einen sich in Richtung vom Grundkörper (1) auf ihr freies Ende (18) verjüngenden Querschnitt aufweisen und so dicht zueinander angeordnet sind, daß die Vertiefungen (14) zwischen den Rippen (11) etwa gleiche Querschnittsfläche, freilich in umgekehrter Anordnung, wie die Querschnittsfläche der Rippen (11) aufweisen, und daß die in den Seitenbereichen (10) angeordneten Kanäle (24, 26, 29) nach der dem Fahrzeugrad zugekehrten Seite offen gestaltet sind und mindestens zwei durchgehende Längsrippen (20, 22) aufweisen, von denen die der Längsmittelebene (8) zugekehrte Längsrippe (20) eine geringere Höhe als die dem Längsrand (4 bzw. 5) des Schmutzfängers zugekehrte Längsrippe (22) hat.

2. Schmutzfänger nach Anspruch 1, dadurch gekennzeichnet, daß die V-förmig angeordneten Rippen (11) zur Horizontalen (13) in einem Winkel (12) in einem Bereich von 18 bis 22°, vorzugsweise etwa 20°, vorgesehen sind.

3. Schmutzfänger nach Anspruch 1 oder 2, dadurch gekennzeichnet, daß die V-förmig angeordneten Rippen (11) einer Höhe von 15 bis 20 mm, vorzugsweise etwa 17 mm, und einen Abstand (15) voneinander von 8 bis 12 mm, vorzugsweise etwa 10 mm, aufweisen.

4. Schmutzfänger nach einem oder mehreren der Ansprüche 1 bis 3, dadurch gekennzeichnet, daß die Flanken (19) der Rippen (11) einen Winkel (34) von etwa 16 bis 18° aufweisen, und daß das freie Ende (18) der Rippen (11) abgerundet gestaltet ist.

5. Schmutzfänger nach einem oder mehreren der Ansprüche 1 bis 4, dadurch gekennzeichnet, daß die V-förmig angeordneten Rippen (11) rechtwinklig zum Grundkörper (1) abstehend vorgesehen sind.

6. Schmutzfänger nach einem oder mehreren der Ansprüche 1 bis 5, dadurch gekennzeichnet, daß die der Längsmittelebene (8) zugekehrte Längsrippe (20) eine Höhe von etwa 7 mm und die anderen Längsrippen (21, 22) eine Höhe von etwa 15 bis 20 mm, vorzugsweise etwa 17 mm, aufweisen.

7. Schmutzfänger nach einem oder mehreren der Ansprüche 1 bis 6, dadurch gekennzeichnet, daß die der Längsmittelebene (8) zugekehrte Längsrippe (20) mit Abstand (24) zum freien Ende der V-förmig angeordneten Rippen (11) angeordnet ist und auch zwischen den anderen Längsrippen Abstände (28) vorgesehen sind.

8. Schmutzfänger nach einem oder mehreren der Ansprüche 1 bis 7, dadurch gekennzeichnet, daß auch die Längsrippen (20, 21, 22) rechtwinklig zum Grundkörper (1) abstehend vorgesehen sind.

9. Schmutzfänger nach einem oder mehreren der Ansprüche 1 bis 8, dadurch gekennzeichnet, daß der Mittelbereich (9), in dem die V-förmigen Rippen (11) angeordnet sind, etwa die Häflte der Breite des Grundkörpers (1) aufweist.

10. Schmutzfänger nach Anspruch 6 bis 8, dadurch gekennzeichnet, daß die Längsrippen (20, 21, 22) am unteren Querrand (3) des Grundkörpers (1) frei endend vorgesehen sind.

## Claims

1. A mud flap (1) for motor vehicles having a flat main body (1) of rubber, synthetic material or the like, on the rear side of which facing the vehicle wheel, in a middle region, ribs (11) extending in a v shape are provided to trap, stop and divert away water whirled up by the vehicle wheel and, in two lateral regions disposed symmetrical to the longitudinal middle plane (8), channels (24, 26, 29) are provided to guide downwards the water trapped and diverted away in the middle region, characterised in that the ribs (11) are provided inclined downwards in a V shape from their peak in the longitudinal middle plane (8), comprise a cross section tapering in the direction from the main body (1) to their free end (18) and are disposed so close to each other that the depressions (14) between the ribs (11) comprise approximately the same cross-sectional surface, though in reverse arrangement, as the cross-sectional surface of the ribs (11), and that the channels (24, 26,29) disposed in the lateral regions (10) are formed open towards the side facing the vehicle wheel and comprise at least two through-going longitudinal ribs (20, 22), of which the longitudinal rib (20) facing the longitudinal middle plane (8) is smaller in height than the longitudinal rib (22) facing the longitudinal edge (4 or 5) of the mud flap.

2. A mud flap according to claim 1, characterised in that, the ribs (11) disposed in a V shape are provided at an angle (12) to the horizontal (13) in the range of 18 to 22°, preferably approximately 20°.

3. A mud flap according to claim 1 or 2, characterised in that, the ribs (11) disposed in a V shape have a height of 15 to 20 mm, preferably approximately 17 mm and a spacing (15) from each other of 8 to 12 mm, preferably approximately 10 mm.

4. A mud flap according to one or more of claims 1 to 3, characterised in that, the edges (19) of the ribs (11) are at an angle (34) of approximately 16 to 18° and that the free end (18) of the ribs (11) is formed rounded off.

5. A mud flap according to one or more of claims 1 to 4, characterised in that, the ribs (11) disposed in a V shape are provided standing out at a right angle to the main body (1).

6. A mud flap according to one or more of claims 1 to 5, characterised in that, the longitudinal rib (20) facing the longitudinal middle plane (8) has a height of approximately 7 mm and the other longitudinal ribs (21, 22) have a height of approximately 15 to 20 mm, preferably approximately 17 mm.

7. A mud flap according to one or more of claims 1 to 6, characterised in that, the longitudinal rib (20) facing the longitudinal middle plane (8) is disposed with a spacing (24) to the free end of the ribs (11), which are disposed V shape, and spacings (28) are also provided between the other longitudinal rib spacings (28).

8. A mud flap according to one or more of claims 1 to 7, characterised in that, the longitudinal ribs (20, 21, 22) are also provided standing out at a right angle to the main body (1).

9. A mud flap according to one or more of claims 1 to 8, characterised in that, the middle region (9), in which the V-shaped ribs (11)are disposed, is approximately half as wide as the main body (1).

10. A mud flap according to claims 6 to 9, characterised in that, the longitudinal ribs (20, 21, 22) are provided with their free ends at the lower transverse edge (3) of the main body (1).

## Revendications

1. Bavolet pare-boue (1) pour véhicules, avec un corps de base (1) relativement plat en caoutchouc, en matière plastique ou autre, sur la face postérieure duquel, tournée vers la roue du véhicule, sont prévus dans une zone médiane des nervures (11) s'étendant en forme de V pour capter, freiner et évacuer l'eau projetée en tourbillons par la roue du véhicule, et dans deux zones latérales disposées symétriquement par rapport au plan longitudinal médian (8) des canaux (24, 26, 29) pour guider vers le bas l'eau captée dans la zone médiane et évacuée hors de celle-ci,
**caractérisé** en ce que les nervures (11) sont prévues sous une forme en V à partir de leur sommet dans le plan longitudinal médian (8) en étant inclinées vers le bas, en présentant une section transversale qui s'amincit vers leur extrémité libre (18) à partir du corps de base (1), et sont disposées si près l'une de l'autre que les creux (14) entre les nervures (11) ont sensiblement la même surface de section transversale que les nervures (11) mais dans une disposition inversée, et en ce que les canaux (24, 26, 29) disposés dans les zones latérales (10) sont ouverts vers le côté orienté vers la roue du véhicule et présentent au moins deux nervures longitudinales continues (20, 22), parmi lesquelles la nervure (20) orientée vers le plan longitudinal médian (8) a une hauteur moindre que la nervure longitudinale (22) orientée vers le bord longitudinal (4 ou 5) du bavolet.

2. Bavolet selon la revendication 1, caractérisé en ce que les nervures (11) disposées en forme de V sont prévues avec un angle (12) de l'ordre de 18 à 22°, de préférence d'environ 20° par rapport à l'horizontale (13).

3. Bavolet selon la revendication 1 ou 2, caractérisé en ce que les nervures (11) disposées en forme de V présentent une hauteur de 15 à 20 mm, de préférence d'environ 17mm, et un espacement (15) entre elles de 8 à 12 mm, de préférence d'environ 10 mm.

4. Bavolet selon une ou plusieurs des revendications 1 à 3, caractérisé en ce que les flancs (19) des nervures (11) présentent un angle (34) d'environ 11 à 18°, et en ce que l'extrémité libre (18) des nervures (11) est arrondie.

5. Bavolet selon une ou plusieurs des revendications 1 à 4, caractérisé en ce que les nervures (11) disposées en forme de V s'élèvent perpendiculairement au corps de base (1).

6. Bavolet selon une ou plusieurs des revendications 1 à 5, caractérisé en ce que la nervure longitudinale (20) orientée vers le plan longitudinal médian (8) présente une hauteur d'environ 7 mm et les autres nervures longitudinales (21, 22) présentent une hauteur d'environ 15 à 20 mm, de préférence d'environ 17 mm.

7. Bavolet selon une ou plusieurs des revendications 1 à 6, caractérisé en ce que la nervure longitudinale (20) orientée vers le plan longitudinal médian (8) est disposée à une distance (23) par rapport à l'extrémité libre des nervures (11) disposées en forme de V et en ce que des espacements (28) sont également prévus entre les autres nervures longitudinales.

8. Bavolet selon une ou plusieurs des revendications 1 à 7, caractérisé en ce que les nervures longitudinales (20, 21, 22) sont également prévues en s'élevant perpendiculairement au corps de base (1).

9. Bavolet selon une ou plusieurs des revendications 1 à 8, caractérisé en ce que la zone médiane (9) dans laquelle sont disposées des nervures (11) en forme de V présente une largeur d'environ la moitié de la largeur du corps de base (1).

10. Bavolet selon les revendications 6 à 8, caractérisé en ce que les nervures longitudinales (20, 21, 22) sont prévues pour se terminer librement au bord transversal inférieur (3) du corps de base (1).
